# EUROPEAN PATENT SPECIFICATION

(11) **EP 1 995 482 B1**
(45) Date of publication and mention of the grant of the patent: **18.07.2012**
(21) Application number: 07010446.8
(22) Date of filing: 25.05.2007
(51) Int. Cl.: F16D 25/08, F04B 35/00, F16D 25/0638, F16D 13/56

(54) **Engine-compressor unit**
Motor-Kompressor-Einheit
Unité de compresseur de moteur

(43) Date of publication of application: 26.11.2008
(73) Proprietor: Hoerbiger Drivetrain Mechatronics B.V.B.A., 8210 Loppem (BE)
(72) Inventor: De Mazière, Filip, 9070 Heusden-Destelbergen (BE)
(74) Representative: Kitzhofer, Thomas

(56) References cited:
- WO-A-2004/101993
- GB-A- 1 249 701
- GB-A- 2 162 255
- US-A- 2 684 742
- US-A- 5 018 352

## Description

The invention relates to an engine-compressor unit according to claim 1.

Such engine-compressor units (see e.g., GB-A-2 162 255 which is considered to be the closest prior art, or GB-A-1 249 701) can be provided in vehicles, e. g. trucks that need compressed air for their pneumatic devices. For this purpose the engine-compressor unit comprises a compressor that is drivingly connected to the engine, e. g. an internal combustion engine of the vehicle.

Known units, however, often suffer from the drawback that the engine and the air compressor are constantly connected, so that the compressor is driven even if enough compressed air is available, resulting in a high power consumption.

It is, therefore, an object underlying the present invention to provide an engine-compressor unit that has a simple design and is less power-consuming compared to known units.

The solution of this object is achieved by the features of claim 1.

As the engine-compressor unit according to claim 1 of the present invention provides the possibility that, for opening the clutch pack, it is only necessary to effect a pushing movement of the piston, it is possible to design the entire unit much more simpler compared to clutch packs that have to be opened by a drawing movement.

Moreover, whenever a sufficient amount of compressed air has been produced, it is easily possible to separate the engine from the air compressor, thus saving a remarkable amount of power and energy.

In further detail the piston of the engine-compressor unit can be activated in particular by compressed air. So, upon activation, the piston can open the clutch pack by separating the spring arrangement from the clutch pack thus disconnecting the engine and the air compressor.

In further detail the piston opens the clutch pack by pushing on fingers of the springs of the spring arrangement so that the springs are used as a cantilever arm to release the high load on the clutch pack.

Especially, the fingers of the springs are passing through slots inside a hub of the engine-compressor unit.

The dependent claims contain advantageous embodiments of the present invention.

According to a preferred embodiment a thrust ball bearing or another suitable type of bearing can be disposed between the piston and the spring arrangement so that, upon moving the bearing towards the spring arrangement, same can be separated from the clutch pack, thus opening the clutch.

The spring arrangement can include at least one disc spring, but preferably two or a plurality of disc springs can be provided. The disc springs can be disposed next to each other and can be provided with fingers with which the disc springs can be fixed on a hub of the unit. The fingers of the spring(s) abut one ring of the bearing whilst the other ring engages the piston, so that, upon moving the piston by the application of pressurized air to one piston side, the bearing can be slightly moved in order to push against the spring arrangement, thus separating the springs from the clutch pack.

In order to prevent slipping of the rolling elements in the bearing as long as the bearing is not subjected to a force from the pressurized piston, it is preferable to bias the piston towards the bearing by a separate disc spring that is disposed between the piston and the compressor housing at a suitable position.

The clutch pack of the unit according to the present invention is preferably disposed between a drive drum that can be fixed to a drive gear that, in turn, is drivingly connected to the engine. So, upon running the engine the drive gear is rotated thus rotating the drive drum fixed to the drive gear. In case the clutch is opened the connection between the drive drum and a crankshaft being connected to the compressor is interrupted, so that the air compressor and the engine are separated from each other. In case the clutch is engaged by the pressure of the spring arrangement, the rotating drive drum is drivingly connected to the hub being fixed on the crankshaft of the compressor unit, so that the engine and the compressor unit can be connected, thus operating the air compressor to produce compressed air e. g. for the pneumatic system of a vehicle, in particular a truck. Such a pneumatic system can be e. g. the brake system of a vehicle.

Briefly summarised, the disc with fingers works as a cantilever so that the clutch plates are loaded with a very high force. In other words, the piston opens the clutch pack by pushing on the fingers of the springs so that the springs are used as a cantilever arm to release the high load on the clutch pack. These fingers are passing through slots inside the hub. The rest point is the OD, the contact point lies between OD and ID of the disc. For opening the clutch, only a small force is needed on the top of the fingers as there is a long cantilever arm from the ID fingers to the OD disc. The resulting advantage is that only a low bearing load and a low piston pressure is needed.

Moreover, the fingers allow that the torque is transmitted by the hub between the fingers. The torque is transmitted from the ID of the clutch plate to the shaft (driving the compressor). In the hubs there are provided slots so that the fingers can pass there through.

So, as mentioned earlier, the clutch can be opened by pushing the spring fingers. This is constructively much simpler than pulling at the spring fingers.

Finally, the thrust bearing can be mounted inside the clutch pack what results in a compact design and in the advantage that the bearing and clutch can be lubricated with the same oil flow.

Further advantages, features and details of the present application will become apparent from the following description of the drawings.
- Fig. 1: shows a cross-section through the clutch of the engine-compressor unit featuring the engine and the air compressor in a schematically simplified way, and
- Fig. 2: shows a perspective view of the clutch according to Fig. 1 with the clutch and a compressor housing being shown as an open cross-section.

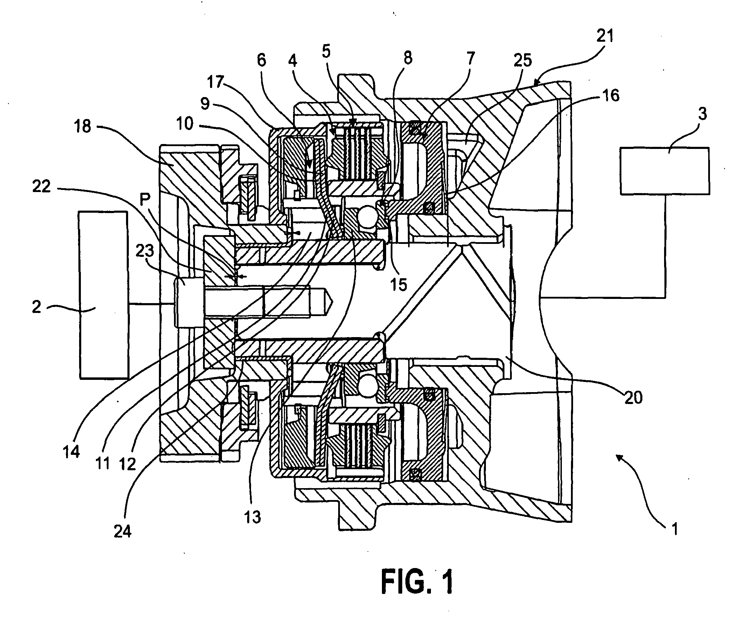

Fig. 1 shows an engine-compressor unit 1 according to the present invention. The engine 2 is depicted as a block as is the air compressor 3.

The engine 2 and the air compressor 3 are connected via a clutch 4 that is disposed in the drive train between the engine 2 and the air compressor 3. Said clutch 4 can be closed and opened in order to drivingly connect the engine 2 and the air compressor 3 and separate these two units from each other, respectively, if an operation of the air compressor 3 is not needed.

The clutch 4 comprises a hub 19, and a clutch pack 5 that is disposed between a drive drum 17 and said hub 19.

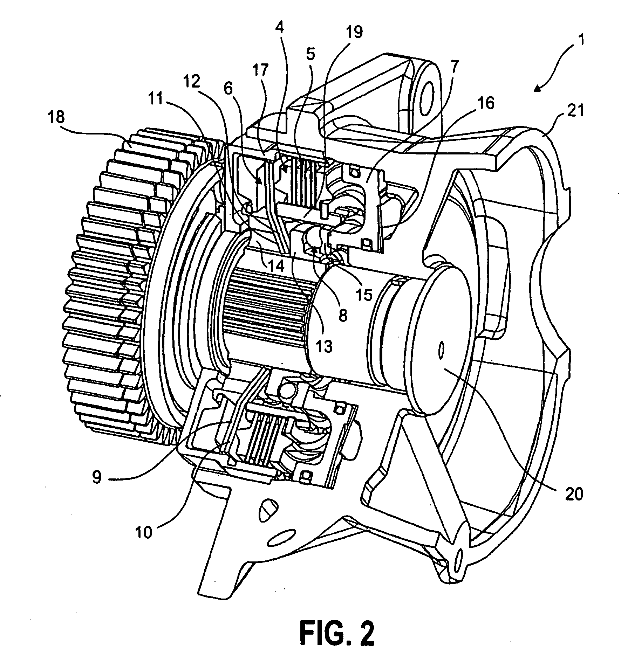

As can be seen from Fig. 1 and 2, the drive drum 17 is fixed to a drive gear 18 that is drivingly connected to said engine 2.

The hub 19, in turn, is fixed to a shaft 20, in particular a crankshaft, that is connected to the air compressor 3.

The hub 19 can be fixed to said shaft 20 by a washer 22 and a screw, in particular a socket head cap screw 23 maintaining a predetermined play P between said washer 22 and the front face of shaft 20, as can be learned from Fig. 1. As can be learned from Fig. 1 and 2, said washer 22 secures the hub 19 as well as the drive gear 18 in position, said drive gear 18 being disposed on a bearing 24 that is disposed on a portion of said hub 19 next to washer 22. However, alternative connectors for the hub 19 are possible.

The clutch pack 5 of clutch 4 is biased by a spring arrangement 6 including, according to the preferred embodiment, two disc springs 9 and 10 having fingers 11 and 12, respectively, being disposed between a stop 14 and one ring 18 of a bearing 8.

The second ring 15 of said bearing 8 abuts against a piston 7 that is disposed, according to the depiction of Fig. 1 and 2, at the right side of clutch pack 5 whilst the spring arrangement 6 abuts said clutch pack 5 at its left side as can be seen in detail from Fig. 1 and 2.

Piston 7 can be pressurized by introducing compressed air into a pressure chamber 25 thus moving piston 7, according to the depiction of Fig. 1 and 2, to the left thus moving said bearing 8 to the left, so that the spring arrangement 6 can be separated from the clutch pack 5. This opens the clutch pack 5 and disconnects the engine 2 from the air compressor 3 as the rotating drive drum 17 is separated from said hub 19 thus disconnecting engine 2 and air compressor 3.

Piston 7 is preloaded by a disc spring 16 biasing said piston 7 slightly to said clutch pack 5 in order to prevent piston 7 from shaking if piston 7 is not actuated by pressurized air. For this purpose said disc spring 16 is disposed between a shoulder of the clutch housing 21 and a neighbouring face of piston 7.

In addition to the written disclosure explicit reference is herewith made to the disclosure of the invention as shown in Fig. 1 and 2.

### Reference signs

- 1: engine-compressor unit
- 2: engine
- 3: air compressor
- 4: clutch
- 5: clutch pack
- 6: spring arrangement
- 7: piston
- 8: bearing, in particular thrust ball bearing
- 9, 10: disc springs
- 11, 12: fingers of disc springs 9 and 10, respectively
- 13: first ring of bearing 8
- 14: end stop
- 15: second ring of bearing 8
- 16: disc spring biasing piston 7
- 17: drive drum
- 18: drive gear
- 19: hub disposed on a shaft 20
- 20: shaft, in particular crankshaft connected to air compressor 3
- 21: compressor housing
- 22: washer
- 23: screw
- 24: bearing between drive gear 18 and hub 19
- 25: pressure chamber
- P: play

## Claims

1. Engine-compressor unit (1) comprising:
- an engine (2);
- an air compressor (3); and
- a clutch (4) being disposed between said engine (2) and said air compressor (3), said clutch (4) including:
• a hub (19) fixed to a shaft (20) connected to said air compressor (3),
• a clutch pack (5),
• a spring arrangement (6) biasing said clutch pack (5) into a closed state drivingly connecting said engine (2) and said air compressor (3), and
• a piston (7) which opens said clutch pack (5) by pushing on fingers (11, 12) of springs (9, 10) of said spring arrangement (6) **characterized in**
- **that** said fingers (11, 12) are passing through slots inside the hub (19), and
- **that** said fingers (11, 12) have a rest point at an outer diameter (OD) of the spring arrangement (6) and a contact point with the clutch pack (5) laying between the outer diameter (OD) and an inner diameter (ID) of the spring arrangement (6).

2. Engine-compressor unit according to claim 1, wherein a bearing (8), in particular a thrust ball bearing, is disposed between said piston (7) and said spring arrangement (6).

3. Engine-compressor unit according to claim 1 or 2 wherein said spring arrangement (6) includes one or a plurality of disc springs (9, 10) each having fingers (11, 12).

4. Engine-compressor unit according to one of claims 1 to 3, being **characterized in that** said fingers (11, 12) are disposed between a first ring (13) of said bearing (8) and an end stop (14) being disposed on said hub (19).

5. Engine-compressor unit according to claim 2 wherein a second ring (15) of said bearing (8) abuts against said piston (7).

6. Engine-compressor unit according to one of claims 2 to 5 wherein said piston (7) is biased toward said bearing (8) by a preloaded spring (16).

7. Engine-compressor unit according to one of claims 1 to 6 wherein said clutch pack (5) is disposed between a drive drum (17) fixed to a drive gear (18) of said engine (2) and said hub (19) fixed to said shaft (20) of said compressor (3).

8. Engine-compressor unit according to claim 7 wherein said shaft (20) is a crankshaft.

## Patentansprüche

1. Motor-Verdichter-Einheit (1) mit:
- einem Motor (2),
- einem Luftverdichter (3), und
- einer Kupplung (4), die zwischen dem Motor (2) und dem Luftverdichter (3) angeordnet ist, wobei die Kupplung (4) Folgendes aufweist:
• eine Nabe (19), die an einer mit dem Luftverdichter (3) verbundenen Welle (20) befestigt ist,
• ein Kupplungspaket (5),
• eine Federanordnung (6), die das Kupplungspaket (5) in einen geschlossenen Zustand beaufschlagt, in dem der Motor (2) und der Luftverdichter (3) triebschlüssig verbunden sind, und
• einen Kolben (7), der das Kupplungspaket (5) öffnet, indem er auf Finger (11, 12) von Federn (9, 10) der Federanordnung (6) drückt, **dadurch gekennzeichnet,**
- **dass** die Finger (11, 12) durch Schlitze innerhalb der Nabe (19) laufen, und
- **dass** die Finger (11, 12) einen Ruhepunkt an einem Außendurchmesser (OD) der Federanordnung (6) und einen Kontaktpunkt mit dem Kupplungspaket (5) haben, der zwischen dem Außendurchmesser (OD) und einem Innendurchmesser (ID) der Federanordnung (6) liegt.

2. Motor-Verdichter-Einheit nach Anspruch 1, bei der ein Lager (8), insbesondere ein Axialkugellager, zwischen dem Kolben (7) und der Federanordnung (6) angeordnet ist.

3. Motor-Verdichter-Einheit nach Anspruch 1 oder 2, bei der die Federanordnung (6) eine oder mehrere Tellerfedern (9, 10) aufweist, die jeweils Finger (11, 12) haben.

4. Motor-Verdichter-Einheit nach einem der Ansprüche 1 bis 3, **dadurch gekennzeichnet, dass** die Finger (11, 12) zwischen einem ersten Ring (13) des Lagers (8) und einem an der Nabe (19) angeordneten Endanschlag (14) angeordnet sind.

5. Motor-Verdichter-Einheit nach Anspruch 2, bei der ein zweiter Ring (15) des Lagers (8) an dem Kolben (7) anliegt.

6. Motor-Verdichter-Einheit nach einem der Ansprüche 2 bis 5, bei der der Kolben (7) von einer vorgespannten Feder (16) zum Lager (8) hin beaufschlagt ist.

7. Motor-Verdichter-Einheit nach einem der Ansprüche 1 bis 6, bei der das Kupplungspaket (5) zwischen einer Antriebstrommel (17), die an einem Antriebsrad (18) des Motors (2) befestigt ist, und der Nabe (19) angeordnet ist, die an der Welle (20) des Verdichters (3) befestigt ist.

8. Motor-Verdichter-Einheit nach Anspruch 7, bei der die Welle (20) eine Kurbelwelle ist.

## Revendications

1. Unité moteur-compresseur (1), comportant :
- un moteur (2) ;
- un compresseur d'air (3) ; et
- un embrayage (4) agencé entre le moteur (2) et le compresseur d'air (3), l'embrayage (4) présentant :
• un moyeu (19) fixé à un arbre (20) qui est relié au compresseur d'air (3),
• un ensemble d'embrayage (5),
• un agencement à ressorts (6) qui sollicite l'ensemble d'embrayage (5) dans un état fermé reliant le moteur (2) et le compresseur d'air (3) en formant une liaison d'entraînement, et
• un piston (7) qui ouvre l'ensemble d'embrayage (5) en poussant sur des doigts (11, 12) de ressorts (9, 10) de l'agencement à ressorts (6), **caractérisé en ce que**
- les doigts (11, 12) passent à travers des fentes à l'intérieur du moyeu (19), et
- les doigts (11, 12) présentent un point de repos sur un diamètre extérieur (OD) de l'agencement à ressorts (6), et un point de contact avec l'ensemble d'embrayage (5) agencé entre le diamètre extérieur (OD) et un diamètre intérieur (ID) de l'agencement à ressorts (6).

2. Unité moteur-compresseur selon la revendication 1, dans laquelle une butée (8), en particulier une butée à billes est agencée entre le piston (7) et l'agencement à ressorts (6).

3. Unité moteur-compresseur selon la revendication 1 ou 2, dans laquelle l'agencement à ressorts (6) comprend un ou plusieurs ressorts à disques (9, 10) présentant chacun des doigts (11, 12).

4. Unité moteur-compresseur selon l'une des revendications 1 à 3, **caractérisée en ce que** les doigts (11, 12) sont agencés entre un premier anneau (13) de la butée (8) et un arrêt d'extrémité (14) agencé sur le moyeu (19).

5. Unité moteur-compresseur selon la revendication 2, dans laquelle un deuxième anneau (15) de la butée (8) est en appui contre le piston (7).

6. Unité moteur-compresseur selon l'une des revendications 2 à 5, dans laquelle le piston (7) est sollicité en direction de la butée (8) par un ressort précontraint (16).

7. Unité moteur-compresseur selon l'une des revendications 1 à 6, dans laquelle l'ensemble d'embrayage (5) est agencé entre un tambour d'entraînement (17) qui est fixé à une roue motrice (18) du moteur (2) et le moyeu (19) qui est fixé à l'arbre (20) du compresseur (3).

8. Unité moteur-compresseur selon la revendication 7, dans laquelle l'arbre (20) est un vilebrequin.
